# EUROPEAN PATENT APPLICATION

(11) **EP 0 961 503 A2**
(43) Date of publication of application: **01.12.1999**
(21) Application number: 99108484.9
(22) Date of filing: 30.04.1999
(51) Int. Cl.: H04N 9/64

(54) **Means of connecting a video source to a colour television receiver/colour monitor**

(30) Priority: 26.05.1998 SE 9801845
(71) Applicant: NOKIA TECHNOLOGY GmbH, 75175 Pforzheim (DE)
(72) Inventor: Martensson, Jan, 59072 Ljungsbro (SE); Larsson, Magne, 59075 Ljungsbro (SE)

(57) **Abstract**

Means of adjusting the horizontal position of the picture on a colour television receiver/colour monitor able to receive RGB signals when connecting a video source to the said colour television receiver/colour monitor. The video source is assumed to have both CVBS and RGB signals. A variable delay of the RGB signals in relation to the CVBS signal is arranged so that the timing of the different signal components in the CVBS signal is not affected.

## Description

### Technical field

The invention concerns a means of adjusting the horizontal position of the picture on a colour television receiver/colour monitor able to receive RGB signals when connecting a video source to the said colour television receiver/colour monitor. The video source is assumed to have both CVBS and RGB signals.

### Prior art

When connecting an external video source to a colour television receiver/colour monitor, the receiver can be fed with either a CVBS signal or RGB signals. In the latter case, however, a synchronising signal, that can be a pure synchronising signal, must be connected to the CVBS input. Nevertheless, the said CVBS signal is often used to synchronise the colour television receiver.

It is known that a better picture sharpness is attained with a colour television receiver/colour monitor when it is fed with RGB signals than when it is fed with a CVBS signal. When connecting to a video source, it is thus desirable to use the picture information in the RGB signals for the picture reproduction, and the synchronisation information in the CVBS signal to synchronise the picture. It is a pre-requisite that the video source has both signal alternatives available simultaneously.

It is this type of connecting up that can be problematic, since one has to make a correction in the video source for the actual signal delay in the colour television receiver/colour monitor, otherwise the picture takes up an incorrect position, i.e. too far to the left, on the screen. The extent of this problem depends on the internal signal delay in the television receiver.

According to one known procedure, the horizontal position of the picture can be corrected by moving the picture information in relation to the synchronisation and blanking pulse. One problem with this procedure is that, apart from the intended change in the RGB signals, even the CVBS signal is affected in the same way, which means that this is no longer correct.

### Brief description of the invention

The objective of the invention is to achieve a means of solving the above said problem. The means is characterised in that it allows a variably adjustable delay of only the RGB signals and their associated blanking pulses in relation to the CVBS signal so that the unwanted effect that occurs when the picture information in both the RGB signals and the CVBS signal are moved in relation to the synchronisation and blanking pulses does not now take place.

Further characteristics of the invention are evident from the claims that follow.

### Description of one embodiment of the invention

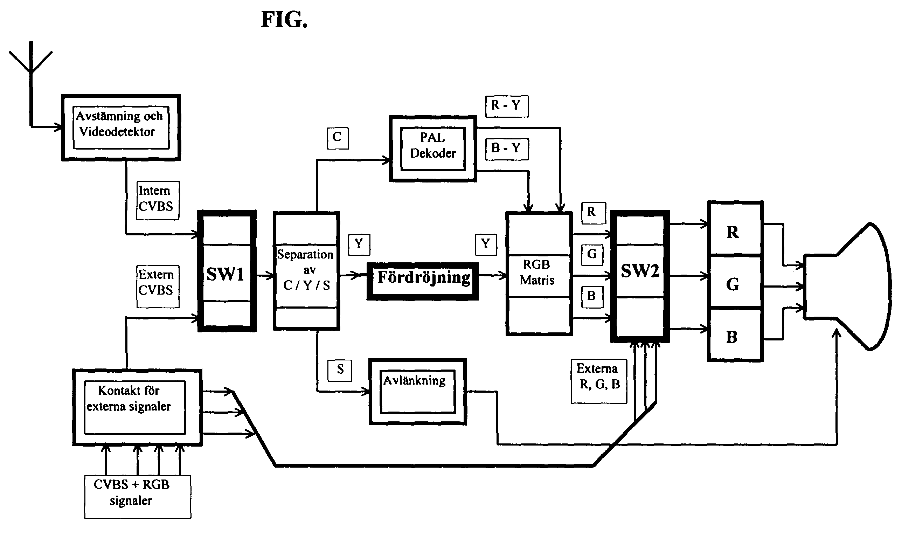

The invention is explained in more detail with the help of a drawing where: The figure shows a simplified block diagram of the relevant components of a colour television receiver.

To better understand the problem to be solved when a video source is to be connected to a colour television receiver/colour monitor, the components of a colour television receiver are described first with reference to the simplified block diagram.

The video signals that will be mentioned are partly the RGB signals and partly the CVBS signal. There are three RGB signals, one for each of the primary colours red, green and blue. The CVBS signal is a composite video signal that includes colour information "C", luminance information "V" (video), synchronisation information "S" as well as a blanking pulse "B" that is not, in fact, a true information signal, but a 'break' in the video information. In the block diagram, "Y" is used instead of "V" for the luminance information. In addition, the block diagram also includes the two colour signals "R-Y" and "B-Y" that are obtained from the C signal.

It is evident from the figure that there are two separately located video switches in the video line where one can choose between internal and external video signals. These are a CVBS switch, designated SW1, and a RGB switch, designated SW2. SW1 is used to initially select whether it is an internal or an external CVBS signal that is to be transmitted further in the video line. The said internal signal comes from the unit designated "tuner and video detector" and the said external signal comes from the unit designated "connector for external signal", (see the figure).

After this, the CVBS signal is divided into three parts, C, Y and S. The C signal is processed via a PAL decoder and is detected as a R-Y signal and a B-Y signal. Both signals are fed into a matrix coupling, into which, the Y signal is also fed. Because the C signal has a narrower bandwidth compared with the Y signal, and because the processing/detecting of the C signal takes a certain amount of time, the Y signal must be delayed in order that the correct timing between the Y signal and the R-Y/B-Y signals is attained. The Y, R-Y and B-Y signals are then converted in the matrix to RGB signals that are fed into the RGB switch, SW2.

In SW2, one selects whether the internal RGB signals, extracted from the CVBS signal, or the external RGB signals that are to be sent on the respective terminal amplifiers that drive the R, G and B cathodes in the picture tube.

The S signal (the synchronisation information) is used to synchronise the deflection functions. As the S signal was separated from the CVBS signal at the beginning of the video line, one must take into account that the RGB signals that drive the picture tube are delayed compared with the S signal. Only the horizontal deflection needs to be taken into account regarding this delay. The delay varies between different colour television receivers depending on which internal solution has been chosen for processing the signals. For the majority of colour television receivers, the delay lies in the interval from 300 ns up to 900 ns.

The largest part of the signal delay takes place between the CVBS switch SW1 and the RGB switch SW2, and it is the correction for this delay that must be made in the connected external video source that can comprise, for example, a digital Set Top Box.

Certain colour television receivers (digital ones) have an extra delay (a whole line minus that previously described) of the RGB signals up to the RGB switch. In practice, this does not then appear as any delay between SW1 and SW2. In this case, correction in the external video source is not necessary.

In the digital Set top Boxes intended for TV reception, for example, the digital TV signals are converted to analog TV signals prior to them being coupled to a colour television receiver's respective CVBS or RGB inputs.

When one has a digital Set Top Box and wants to feed a colour television receiver with RGB signals, one has until now had to correct the picture's horizontal position by displacing the digital picture information in time in relation to the synchronisation and blanking pulse. This has been done by deciding where on the horizontal TV line the picture information is to begin. With the assistance of a number of programmable steps, one has been able to make the desired picture displacement in the horizontal direction until the picture has been correctly centred on the relevant colour television receiver. This adjustment has then been saved.

The disadvantage of this solution is, as indicated above, that when the picture information has to be displaced in relation to the synchronisation pulse and blanking pulse in this way, the CVBS signal is no longer correct.

For example, if, in parallel with RGB receiving in a colour television receiver with a digital Set Top Box corrected in the right way for this purpose, one also wants to record a program with the help of a video recorder that uses the CVBS signal, the picture when played back later will take up a position in the horizontal direction that is wrong and now too far to the right on the TV screen.

The same thing will happen if, for example, the digital Set Top Box has a built-in RF modulator that then feeds out the modulated CVBS signal along the antenna cable so that one can, for example, watch the programme on another television receiver that could be located in another room.

The means according to the invention does not give any unwanted effects on the timing of the signal components that comprise the composite CVBS signal. The solution is that a variably adjustable time delay is arranged for only the RGB signals and the blanking pulses that are associated with them. This delay is suitably adjustable in discrete steps.

Even in this case, the adjusted horizontal picture position that is suitable for the colour television receiver/colour monitor that is connected for RGB receiving can be saved.

The implementation of the delay can be achieved by different ways that are well-known for a person skilled in the art and is not described in detail here.

If the variable delay can be varied from zero and up to a time sufficiently long for the purpose, and if each step that changes the adjustment is not too large, the right horizontal picture position for a normal colour television or colour monitor intended for RGB signals can always be set, at the same time as a fully correct composite CVBS signal is still maintained.

The principle is not only of use for digital Set Top Boxes, as indicated in the above example, but can be applied in all video sources where one has both RGB and CVBS signals intended to be used in parallel and where the timing between the RGB signals on the one hand, and the synchronisation information, in this case the CVBS signal, on the other hand, needs to be adjusted.

## Claims

1. Means for adjusting the horizontal position of the picture on a colour television receiver/colour monitor able to receive RGB signals when connecting an external video source to the said colour television receiver/colour monitor,
**characterised** in that a variable delay of the RGB signals in relation to the CVBS signal is arranged in the external video source signal path, so that the timing of the different signal components in the CVBS signal is not affected.

2. Means according to claim 1,
**characterised** in that the delay is adjusted in discrete steps.

3. Means according to claim 1 or 2,
**characterised** in that an information representing the adjusted delay is saved in a memory.
